## Europäisches Patentamt
## European Patent Office
## Office européen des brevets

(11) Publication number: **0 160 529**
**B1**

# EUROPEAN PATENT SPECIFICATION

(45) Date of publication of patent specification: **21.06.89**

(51) Int. Cl.⁴: **H 01 R 4/22,** G 05 D 23/02

(21) Application number: **85302929.6**

(22) Date of filing: **25.04.85**

(54) Heat activatable sealing piston and electrically conductive connector.

(30) Priority: **27.04.84 US 604791**

(43) Date of publication of application:
**06.11.85 Bulletin 85/45**

(45) Publication of the grant of the patent:
**21.06.89 Bulletin 89/25**

(84) Designated Contracting States:
**AT BE CH DE FR GB IT LI NL SE**

(56) References cited:
DE-A-3 037 632
GB-A-2 137 913
US-A-2 458 152
US-A-3 243 211
US-A-3 302 391
US-A-3 396 894

(73) Proprietor: **RAYCHEM CORPORATION (a
Delaware corporation)
300 Constitution Drive
Menlo Park, California 94025 (US)**

(72) Inventor: **Magay, Daniel
1674 Clay Drive
Los Alto California 94022 (US)**
Inventor: **Toy, Lester Tungnan
33235 Pheasant Street
Fremont California 94536 (US)**

(74) Representative: **Jones, David Colin et al
Raychem Limited Intellectual Property Law
Department Faraday Road Dorcan
Swindon, Wiltshire SN3 5HH (GB)**

Courier Press, Leamington Spa, England.

## Description

This invention relates to the use of a heat-activatable sealing piston in thermal actuators and in particular it relates to the use of such a piston in an electrical connector.

In European Patent Application Publication No. 125042A, the disclosure of which is incorporated herein by this reference, there is disclosed an electrically conductive connector for electrical conductors. In some embodiments, a solid slug of solder is positioned in the base of the connector and a conductor is then inserted. When sufficient heat is applied to melt the solder, a pressuring means forces the solder between the conductor and the side walls of the connector and, if a stranded conductor is used, between the strands of the conductor. A preferred pressuring means comprises a piston and a composition which on application of heat evolves a gas. On continued heating, the solder melts and the pressure of the evolved gas acts on the piston causing it to move toward the open end of the connector and force the solder between the conductor and connector. A problem encountered with this embodiment is the difficulty of providing a seal around the piston to prevent leakage of the gas or the gas evolving substance before sufficient pressure has been developed.

This invention relates to a sealing piston, and particularly a heat activatable sealing piston, which can be used in such a connector. Further, the sealing piston is capable of use in other systems or apparatus such as thermal actuators which operate, for example, a relief valve.

Heat expandable devices are known. For example, heat expandable rivets and the like have been proposed in the art. See for example Swiss Patent No. 423,209 to Dynamit Nobel and U.S. Patent No. 2,458,152 to Eakins. The heat expandable rivets described in these patents are used to securely fasten one object to another. Movement of the rivet after installation is not possible nor is it desirable.

U.S. Patent No. 3,243,211, to Wetmore, mentions the use of heat expandable tubular articles. The use of such articles closed at one end can be used to plug, for example, pipes or other conduits. In accordance with the Wetmore invention, a fusible member, such as an adhesive, is positioned on the expandable article. On application of heat, the fusible member melts and flows. As a result, the plug is securely bonded to the inner walls of the pipe.

The use of a sealing piston in thermal actuators is described in U.S. Patent No. 3,302,391, to Mihm. In this patent an elastomeric plug is used as a sealing piston within a tube. To effect the seal, washers are provided at each end of the plug and a screw, which extends through the plug and washers, can be tightened to cause the plug to expand radially and thereby form a seal between the plug and the walls of the tube. The plug is positioned within the tube on top of a column of heat expandable material, such as wax which expands on melting. When heated the material melts and expands and, since it is confined by the walls of the tube, the expansion is in the axial direction. The elastomeric plug is subjected to an axial force which produces an increase in the radial pressure exerted by the plug the walls of the tube and causes the plug to move longitudinally in the tube thereby operating a relief valve to which it is connected. The assembly can be used, for example, in a hot water tank. Similar devices are disclosed in U.S. Patents No. 3,194,009 to Baker and 3,319,467 to Feinberg.

One aspect of this invention provides a method of producing a sealing piston within a hollow, relatively rigid tubular article which comprises:

a) forming a cylinder of polymeric material, said cylinder having a diameter to length ratio less than 4.5:1;

b) placing said cylinder within a tubular article which has an internal diameter greater than the diameter of the disk by an amount of up to about 300%;

c) heating to effect radial expansion of the cylinder causing it to exert a pressure on the walls of said tubular article thereby forming a seal between the cylinder and the walls of the tubular article; and

d) exerting an axial pressure on said cylinder causing it to move axially within the tubular article while maintaining the seal between the cylinder and the walls of the tubular article.

Another aspect of this invention comprises an electrically conductive connector for electrical conductors comprising:

a) at least one metallic tubular sleeve having an open end for receiving an electrical conductor and a closed end, the peripheral inner wall of the sleeve being pretinned, the sleeve being sized to receive a slug of solder therein proximate to the closed end;

b) a cylinder of heat expandable polymeric material, said cylinder having a diameter to length ratio less than 4.5:1 and having a diameter in the unexpanded state of less than the inner diameter of the sleeve and in the expanded state of greater than the inner diameter of the sleeve so that on application of heat, the cylinder will expand and exert a radial force against the walls of the sleeve thereby forming a seal between the disk and the walls of the sleeve; and

c) pressuring means between the cylinder and the closed end of the sleeve which on application of heat exerts sufficient force on the expanded cylinder to cause it to move toward the open end of the sleeve and to pressure the slug of solder toward the open end of the sleeve when the solder slug has melted.

This invention thus provides a radially expandable piston which when positioned within a tube and heated, expands to form a seal between the piston and the inner walls of the tube. Further, on application of sufficient axial force on the piston, the piston is capable of maintaining said seal while moving in the axial direction. The heat expandable piston can be used in an electrical connector as described above using pressurized gas to move the piston without encountering the problem of gas leakage. The piston preferably has an initial diameter less than the internal diameter of the tube with which it is used, making thermal actuators and the like using the piston more easily assembled than the actuators described in the above mentioned references.

The heat activatable sealing-piston comprises a cylinder of polymeric material having a diameter to length ratio of less than about 4.5:1, preferably less than about 3.5:1 and most preferably less than about 2.5:1. The polymeric material may be a thermoplastic, thermoset or elastomeric or combinations thereof.

Thermoplastic materials which can be used include, for example, resins comprising, for example polyolefins and olefin copolymers for example polyethylene, polypropylene, ethylene/ propylene copolymer and polybutenes; substituted polyolefins, for example, ethylene-vinyl acetate copolymer, ethylene-ethyl acrylate copolymer or other ethylene copolymers; substituted polyolefins, particularly halogen-substituted polyolefins, for example polyvinyl chloride, polyvinylidene chloride, polyvinylidene fluoride. Teflon 100 (a polytetra-fluoroethylene manufactured by Du Pont), Teflon FEP (a copolymer of tetrafluoroethylene and hexafluoro-propylene manufactured by Du Pont), Teflon PFA (a copolymer of tetrafluoroethylene and perfluoroalkoxy moieties manufactured by Du Pont), Tefzel (a terpolymer of ethylene tetrafluoroethylene and a fluorinated monomer manufactured by Du Pont), and Halar (a copolymer of ethylene and chlorotrifluoroethylene manufactured by Allied Chemicals); polyesters, particularly segmented copolyester polymers, for example Hytrel (a segmented polyether ester copolymer derived from terephthalic acid, polytetramethylene ether glycol and 1,4-butanediol manufactured by Du Pont); polyurethanes; and styrene block copolymers, for example Kraton manufactured by Shell which are styrene-butadiene-styrene, styrene-isoprene-styrene and styrene-butylene-styrene block copolymers. Blends of one or more of these resins can be used to give the cylinder desired properties for the intended use.

Thermoset materials which can be used include, for example, epoxy resins, phenolic resins, acrylic resins, silicone resins, melamine resins, butadiene resins, polyesters and polyurethanes.

Elastomeric materials which can be used include elastomers comprising, for example, copolymers of dienes with olefinically unsaturated monomers, for example ethylene/propylene/non-conjugated diene terpolymers, styrene/butadienepolymers, butyl rubbers and copolymers of dienes with unsaturated polar monomers, for example acrylonitrile, methyl methacrylate, ethyl acrylate, vinyl pyridine and methyl vinyl ketone; halogen-containing elastomers, for example chloroprene polymers and copolymers, for example neoprene, chlorinated polyethylene, chlorosulphonated polyethylene, and Viton (a copolymer of vinylidene fluoride and hexafluoropropylene manufactured by Du Pont); copolymers of olefins with olefinically unsaturated esters, for example elastomeric ethylene/vinyl acetate polymers, ethylene/acrylic acid ester copolymers for example ethylene/ethyl acrylate and methacrylate copolymers and particularly ethylene/acrylic rubbers, for example Vamac (a terpolymer of ethylene, methyl acrylate and a curesite monomer manufactured by Du Pont); acrylic rubbers, for example polyethyl acrylate, polybutyl acrylate, butyl acrylate/ethyl acrylate copolymers, and butyl acrylate/glycidyl methacrylate copolymers; silicone elastomers, for example polydiorganosiloxanes, copolymers, block copolymers, and terpolymers of monomethylsiloxanes, dimethylsiloxanes, methylvinylsiloxanes and methylphenylsiloxanes, fluorosilicones, for example those derived from 3,3,3-trifluoropropyl siloxane and carborane siloxanes; elastomeric polyurethanes; and polyethers, for example epichlorohydrin rubbers. Blends of two or more elastomers can also be used.

The cylinder can comprise a single polymeric material or can comprise two or more materials. For example, to provide a cylinder of the desired modulus and desired surface properties, the cylinder can comprise a central core of thermoplastic material with a layer of elastomer material surrounding the core. The reverse can also be used, e.g. an elastomeric core and a thermoplastic outer layer.

The material is preferably cross-linked by irradiation or by chemical means. For example, the material can be subjected to gamma irradiation from a source such as cobalt 60, or by high energy electrons from an electron beam. Cross-linking promotors such as allyl isocyanates, allyl cyanates, acrylate and methacrylate monomers or the like can be incorporated into the material to provide the desired degree of cross-linking. Cross-linking by chemical means comprises the incorporation of a cross-linking agent into the material and permitting it to cross-link. Heat may be applied to initiate such chemical cross-linking. Cross-linking agents which may be used include, organic peroxides, hydroperoxides, sulfur, phenolic resins, quinone dioxime, nitrobenzene and metal oxides. Cross-linking by subjecting the polymer to irradiation is preferred.

One method of preparing the cylinder comprises extruding a sheet of the polymeric material having a thickness approximately equal to the desired length of the cylinder, for example, about 1 to about 25 millimeters. Cylinders of the desired diameter can then be stamped from the sheet. The cylinder can also be prepared by extruding a continuous rod of the material having the appropriate diameter. The rod can then be cut into individual cylinders of the desired length. The diameter to length ratio of the cylinder should be less than about 4.5:1, preferably less than about 3.5:1 and most preferably less than about 2.5:1. If the diameter to length ratio is greater than about 4.5:1, the cylinder is likely to tilt in the tubular article and is likely not to function as a sealing piston, since, when tilted, it is unable to maintain the seal between the cylinder and the walls of the tube.

When the cylinder is subjected to heat, the diameter expands due to thermal expansion of the material. In order to provide a seal between the cylinder and the walls of the tubular article, the cylinder should be sized such that in its non-expanded state it has a diameter less than the diameter of the tube and when expanded would have a diameter greater than the inside diameter of the tube. The expandability of the cylinder should be in the range of from about 5% to about 300% of the diameter in the unexpanded state. A cylinder of polymeric material expands to a certain extent by thermal expansion of the material. In some applications, the degree of thermal expansion is adequate. However, in some instances a greater degree of expansion is desired. This can be achieved by stretching the cylinder in the axial direction at elevated temperature and cooling the cylinder while restraining it in the stretched configuration. Stretching the cylinder causes the diameter to decrease. On application of heat the cylinder will recover to its unstretched configuration causing the diameter to recover to or toward its initial dimensions. In embodiments of the invention in which the cylinder is stretched longitudinally to provide greater radial expansion, the material of the cylinder should comprise a crosslink thermoplastic or a multi-layer structure having, for example a core of thermoplastic with an outer layer of an elastomer, or vice versa.

The surface of the heat expandable cylinder facing the pressurizing means may have a concave configuration. This has been found to be particularly advantageous when the pressurizing means comprises a gas generating means. The cavity formed by the concave surface enables the generated gas to partially expand before the solder has melted resulting in greater control over the amount of pressure exerted on the molten solder. Further, the hollowed out or concave configuration permits deformation of the side walls of the cylinder into the cavity if there is significantly axial expansion of the cylinder on heating. This prevents elongation of the cylinder which might otherwise dislodge the conductor from its position in the sleeve. When the cylinder has a concave surface, the effective length of the cylinder is the average distance through the cylinder taking into consideration the concave configuration.

A method of producing a sealing piston, and an electrically conductive connector comprising a sealing piston, each in accordance with the present invention, will be described, by way of example, with reference to the accompanying drawings, in which:

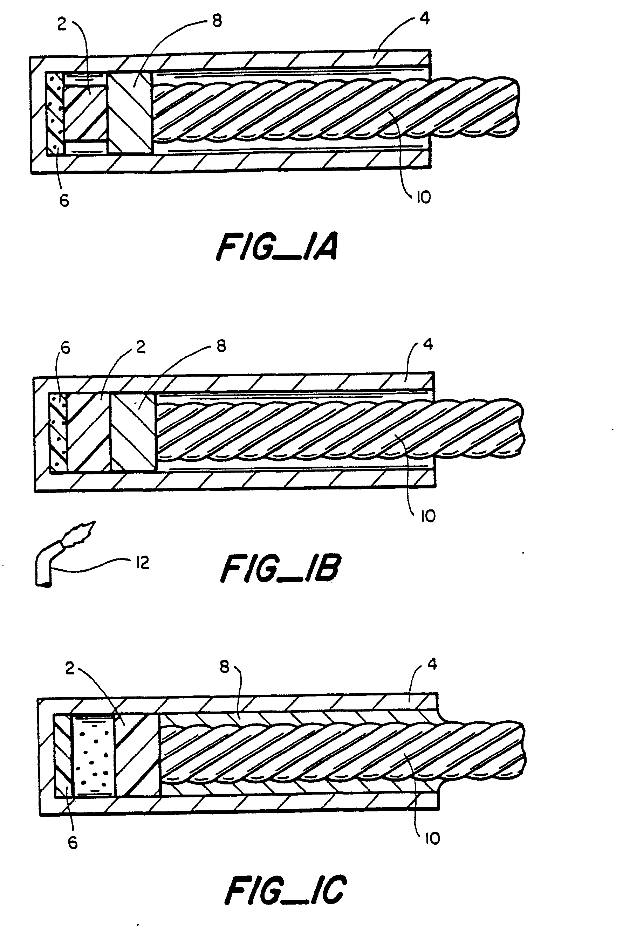

Figure 1A shows a transverse cross-section of the electrical connector containing an unexpanded sealing piston, a gas generating means, a slug of solder and the connector which is to be connected to the conductor;

Figure 1B shows an intermediate stage in the installation of the connector, illustrating the sealing piston after expansion thereof to form a seal between the piston and the inner wall of the sleeve.

Figure 1C shows the completed connection in which the gas generating means has acted on the sealing piston to force molten solder between the conductor and connector.

In the Figures, a heat expandable cylinder 2, of crosslinked high density polyethylene, is positioned in a metallic tubular sleeve, 4, having an open end and a closed end. As discussed in above mentioned European Publication 125042A, this sleeve may represent a terminating lug for an electrical conductor or may represent one portion of a connector connecting two, or more electrical conductors, for example, the closed end of the sleeve may be integral with a similar sleeve, or a sleeve adapted to receive two conductors and thereby form a Y-splice of two conductors on one side, one on the other. As discussed in EP 125042A, the inner surface of the metal sleeve is preferably pretinned.

Between cylinder, 2, and the closed end is a gas generating means, 6. The gas generating means illustrated is a disk of silicone resin containing a gas generating substance such as 5-phenyl tetrazole and its calcium or barium salts, which on heating generates nitrogen gas. As discussed in EP 125042A, other pressurizing means can be used, for example a compressed spring, to apply pressure to the piston.

A slug of solder, 8, is positioned next to the cylinder on the side toward the open end of the sleeve. Conductor 10 is inserted in the open end of the sleeve and contacts solder slug 8. Figure 1A shows the connector just after the conductor has been inserted. In Figure 1B, heat has been applied by means of a propane torch 12. Sufficient heat has been applied to cause the piston to expand forming a seal between the cylinder 2 and the inner surface of the walls of the metal tubular sleeve 4. Solder slug 8 has not yet melted. On continued heating the pressure on the gas generated by the gas generating means, 6, increased. When sufficient heat has been applied, the solder melts and the pressure built up by the gas generating means forces cylinder, 2, to force the solder, 8, between conductor, 10, and the connector, 4. This is illustrated in Figure 1C which shows the completed installation of the conductor. As is readily evident, the gas tight feature of the seal between cylinder, 2, and sleeve, 4, makes possible the build up of pressure of the gas generated by means, 6, to a sufficient level to force the cylinder, 2, toward the open end of the connector forcing the molten solder ahead of it. The gas generating means thus should generate gas at a temperature somewhat lower than the melting point of the solder. In other words, on application of heat, the cylinder should expand first followed by gas generation and pressurization, and then melting of the solder.

On cooling the installed connection, the cylinder will contract and no longer form a seal between the cylinder and the metal sleeve which, since the solder has by then been forced between the conductor and connector and solidified, this is of no consequence. In other embodiments however, this feature provides reversibility of the seal. In other words, the cylinder forms a gas tight seal at elevated temperatures repeatedly. This is advantageous when the cylinder is used as a piston in a thermal actuator such as a relief valve. The valve can be made to open when pressure behind the piston is sufficient to cause it to move axially and when conditions have returned to e.g. ambient temperature, the piston contracts and the valve is permitted to close. On reheating, the cycle is repeated. This piston thus is suitable for use in a relief valve for a hot water tank or the like. Instead of operating a relief valve, motion of the sealed piston can be reflected on a measuring or detecting mechanism to provide a means for determining pressure build up in such a system.

## Claims

1. A method of producing a sealing piston within a hollow, relatively rigid tubular article which comprises:

a) forming a cylinder (2) of polymeric material, said cylinder having a diameter to length ratio less than 4.5:1;

b) placing said cylinder (2) within a tubular article (4) which has an internal diameter greater than the diameter of the cylinder by an amount of up to about 300%;

c) heating to effect radial expansion of the cylinder (2) causing it to exert a pressure on the walls of said tubular article (4) thereby forming a seal between the cylinder and the walls of the tubular article; and

d) exerting an axial pressure on said cylinder (2) causing it to move axially within the tubular article while maintaining the seal between the cylinder and the walls (4) of the tubular article.

2. A method in accordance with Claim 1 wherein pressure is exerted on said cylinder (2) by pressurized gas.

3. A method in accordance with Claim 2 wherein said pressurized gas is formed in situ by heating a gas generating means (6) positioned within said tubular article.

4. A method in accordance with any preceding Claim, wherein expansion of the cylinder (2) is due to recovery of the cylinder from a stretched configuration toward an original unstretched configuration, thereby causing increased radial expansion.

5. A method in accordance with any preceding Claim, wherein said cylinder (2) comprises a crosslinked thermoplastic, preferably crosslinked polyethylene.

6. An electrically conductive connector for electrical conductors comprising:

a) at least one metallic tubular sleeve (4) having an open end for receiving an electrical conductor (10), and a closed end, the peripheral inner wall of the sleeve being pretinned, the sleeve being sized to receive a slug of solder (8) therein proximate to the closed end;

b) a cylinder (2) of heat expandable polymeric material, said cylinder having a diameter to length, ratio less than 4.5:1 and having a diameter in the unexpanded state of less than the inner diameter of the sleeve (4) and in the expanded state of greater than the inner diameter of the sleeve so that on application of heat, the cylinder (2) will expand and exert a radial force against the walls of the sleeve (4) thereby forming a seal between the cylinder (2) and the walls of the sleeve (4); and

c) pressuring means (6) between the cylinder (2) and the closed end of the sleeve (4) which on application of heat exerts sufficient force on the expanded cylinder to cause it to move toward the open end of the sleeve and to pressure the slug of solder (8) toward the open end of the sleeve (4) when the solder slug has melted.

7. A connector in accordance with Claim 6 wherein said cylinder comprises a crosslinked thermoplastic, preferably crosslinked polyethylene.

8. A connector in accordance with Claim 6 or 7 wherein said pressuring means (6) comprises a gas evolving substance.

9. A connector in accordance with Claim 8 wherein said gas evolving substance is 5-phenyl tetrazole; and is in a silicone rubber.

10. A connector in accordance with Claim 6 or 7 wherein said pressuring means (6) is a compressed spring.

## Patentansprüche

1. Verfahren zur Herstellung eines Dichtungskolbens innerhalb eines hohlen, relativ steifen rohrförmigen Gegenstandes, welches folgendes umfaßt:

a) Formen eines Zylinders (2) aus polymerem Material, wobei der Zylinder ein Verhältnis von Durchmesser zu Länge von weniger als 4,5:1 hat;

b) Anordnen des Zylinders (2) innerhalb eines rohrförmigen Gegenstandes (4), der einen Innendurchmesser hat, der um einen Betrag bis zu etwa 300% größer ist als der Durchmesser des Zylinders;

c) Beheizen zur Erzielung einer radialen Ausdehnung des Zylinders (2), um dafür zu sorgen, daß er einen Druck auf die Wände des rohrförmigen Gegenstandes (4) ausübt, um dadurch eine Dichtung zwischen dem Zylinder und den Wänden des rohrförmigen Gegenstandes zu bilden; und

d) Ausüben eines axialen Druckes auf den Zylinder (2), um dafür zu sorgen, daß er sich innerhalb des rohrförmigen Gegenstandes axial bewegt, wobei die Dichtung zwischen dem Zylinder und den Wänden (4) des rohrförmigen Gegenstandes aufrechterhalten wird.

2. Verfahren nach Anspruch 1, wobei Druck auf den Zylinder (2) durch unter Druck stehendes Gas ausgeübt wird.

3. Verfahren nach Anspruch 2, wobei das unter Druck stehende Gas durch Beheizen einer gaserzeugenden Einrichtung (6), die sich innerhalb des rohrförmigen Gegenstandes befindet, in situ gebildet wird.

4. Verfahren nach einem der vorherigen Ansprüche, wobei die Ausdehnung des Zylinders (2) auf einer Rückstellung des Zylinders aus einer gestreckten Konfiguration in eine ursprünglich nicht gestreckte Konfiguration beruht, so daß dadurch eine vergrößerte radiale Ausdehnung hervorgerufen wird.

5. Verfahren nach einem der vorherigen Ansprüche, wobei der Zylinder (2) einen vernetzten Thermoplast, vorzugsweise vernetztes Polyethylen aufweist.

6. Elektrisch leitfähiger Verbinder für elektrische Leitungen, umfassend:

a) mindestens eine metallische rohrförmige Buchse (4) mit einem offenen Ende zur Aufnahme eines elektrischen Leiters (10) und mit einem geschlossenen Ende, wobei die innere Umfangswand der Buchse vorverzinnt ist, wobei die Buchse so bemessen ist, daß sie in ihrem Innenraum in der Nähe des geschlossenen Endes einen Klumpen von Lot (8) aufnimmt;

b) einen Zylinder (2) aus durch Wärme expandierbarem polymeren Material, wobei der Zylinder ein Verhältnis von Durchmesser zu Länge von weniger als 4,5:1 und im nicht expandierten Zustand einen Durchmesser hat, der kleiner ist als der Innendurchmesser der Buchse (4), und im expandierten Zustand einen Durchmesser hat, der größer ist als der Innendurchmesser der Buchse, so daß beim Aufbringen von Wärme der Zylinder (2) expandieren und eine radiale Kraft auf die Wände der Buchse (4) ausüben wird, um dadurch eine Dichtung zwischen dem Zylinder (2) und den Wänden der Buchse (4) zu bilden; und

c) eine druckerzeugende Einrichtung (6) zwischen dem Zylinder (2) und dem geschlossenen Ende der Buchse (4), die beim Aufbringen von Wärme eine ausreichende Kraft auf den expandierten Zylinder ausübt, um dafür zu sorgen, daß er sich zum offenen Ende der Buchse hin bewegt und den Klumpen von Lot (8) zum offenen Ende der Buchse (4) hin drückt, wenn der Lotklumpen geschmolzen ist.

7. Verbinder nach Anspruch 6, wobei der Zylinder einen vernetzten Thermoplast, vorzugsweise vernetztes Polyethylen aufweist.

8. Verbinder nach Anspruch 6 oder 7, wobei die druckerzeugende Einrichtung (6) eine Gas entwikkelnde Substanz aufweist.

9. Verbinder nach Anspruch 8, wobei die Gas entwickelnde Substanz 5-Phenyltetrazol ist und sich in einem Silikongummi befindet.

10. Verbinder nach Anspruch 6 oder 7, wobei die druckerzeugende Einrichtung (6) eine komprimierte Feder ist.

**Revendications**

1. Procédé de production d'un piston d'étanchéité à l'intérieur d'un corps creux tubulaire relativement rigide, qui consiste:

a) à former un cylindre (2) en matière polymérique, ledit cylindre ayant un rapport diamètre:longueur inférieur à 4,5:1;

b) à placer ledit cylindre (2) à l'intérieur d'un corps tubulaire (4) dont le diamètre intérieur est supérieur au diamètre du cylindre dans une proportion allant jusqu'à environ 300%;

c) à chauffer pour provoquer la dilatation radiale du cylindre (2), en sorte qu'il exerce une pression sur la paroi dudit corps tubulaire (4) de manière à former ainsi un joint entre le cylindre et la paroi du corps tubulaire; et

d) à exercer une pression axiale sur ledit cylindre (2) de manière qu'il se meuve axialement à l'intérieur du corps tubulaire (4), tout en maintenant l'étanchéité entre le cylindre et la paroi du corps tubulaire.

2. Procédé suivant la revendication 1, dans lequel une pression est exercée sur ledit cylindre (2) par un gaz sous pression.

3. Procédé suivant la revendication 2, dans lequel le gaz sous pression est engendré in situ par chauffage de moyens (6) engendrant un gaz, disposés à l'intérieur dudit corps tubulaire.

4. Procédé suivant l'une quelconque des revendications précédentes, dans lequel la dilatation du cylindre (2) est due au fait que le cylindre revient d'une configuration étirée à une configuration originelle non étirée, ce qui provoque une expansion radiale accrue.

5. Procédé suivant l'une quelconque des revendications précédentes, dans lequel ledit cylindre (2) est réalisé en une matière thermoplastique réticulée, de préférence en polyéthylène réticulé.

6. Connecteur conduisant l'électricité pour conducteurs électriques, comprenant:

a) au moins un manchon métallique tubulaire (4) présentant une extrémité ouverte pour recevoir un conducteur électrique (10) et une extrémité fermée, la paroi intérieure périphérique du manchon étant préétamée, les dimensions du manchon étant établies de manière qu'il puisse recevoir une pastille (8) de soudure à proximité de l'extrémité fermée;

b) un cylindre (2) en matière polymérique susceptible de dilatation thermique, ledit cylindre (2) ayant un rapport diamètre:longueur inférieur à 4,5:1 et ayant un diamètre à l'état non dilaté inférieur au diamètre intérieur du manchon (4) et, à l'état dilaté, supérieur au diamètre intérieur du manchon de manière que, sous l'effet de l'application de chaleur, le cylindre (2) se dilate et exerce une force radiale contre la paroi du manchon (4) en formant ainsi un joint étanche entre le cylindre et la paroi du manchon (4); et

c) des moyens (6) capables de créer une pression entre le cylindre (2) et l'extrémité fermée du manchon (4) qui, lorsque de la chaleur est appliquée, exercent une force suffisante sur le cylindre dilaté pour qu'il puisse se mouvoir vers l'extrémité ouverte du manchon et presser la pastille (8) de soudure vers l'extrémité ouverte du manchon (4) lorsque cette pastille a fondu.

7. Connecteur suivant la revendication 6, dans lequel ledit cylindre est réalisé en une matière thermoplastique réticulée, de préférence en polyéthylène réticulé.

8. Connecteur suivant la revendication 6 ou 7, dans lequel lesdits moyens (6) engendrant une pression comprennent une substance dégageant un gaz.

9. Connecteur suivant la revendication 8, dans lequel ladite substance dégageant un gaz est le 5-phényltétrazole et est dans un caoutchouc de silicone.

10. Connecteur suivant la revendication 6 ou 7, dans lequel lesdits moyens (6) engendrant une pression consistent en un ressort comprimé.

FIG_IA

FIG_IB

FIG_IC